# EUROPEAN PATENT SPECIFICATION

(11) **EP 2 792 112 B1**
(45) Date of publication and mention of the grant of the patent: **29.08.2018**
(21) Application number: 11811187.1
(22) Date of filing: 15.12.2011
(51) Int. Cl.: H04L 12/70

(54) **TECHNOLOGY AWARE DIFFSERV MARKING**
DIFFSERV-MARKIERUNG UNTER BERÜCKSICHTIGUNG DER TECHNOLOGIE
TECHNOLOGIE SENSIBLE AU MARQUAGE DIFFSERV (SERVICE DIFFÉRENCIÉ)

(43) Date of publication of application: 22.10.2014
(73) Proprietor: Telefonaktiebolaget LM Ericsson (publ), 164 83 Stockholm (SE)
(72) Inventor: THYNI, Tomas, S-175 66 Järfälla (SE); FORSMAN, Mats, S-144 40 Rönninge (SE); WELIN, Annikki, S-171 60 Solna (SE)
(74) Representative: Ericsson
(86) International application number: PCT/SE2011/051523
(87) International publication number: WO 2013/089603

(56) References cited:
- US-A1- 2003 039 246
- US-A1- 2008 002 579
- US-B1- 6 865 185

## Description

### TECHNICAL FIELD

The present disclosure relates to the technical field of mobile telecommunication. In more detail, the following disclosure presents embodiments of nodes in radio access networks and methods in said nodes, said methods supporting enhanced scheduling of IP data packets originating from different radio access technologies.

### BACKGROUND

The following technology relates to the handling and scheduling of data packet traffic in Radio Access Networks serving multiple Radio Access Technologies.

From the US patent number 6,865,185, it is earlier known a method and system for queuing traffic in a wireless network including the reception of a stream of packets for transmission in the wireless network. For handling each packet, the data packets are queued in an assigned virtual group for transmission in the wireless network.

The patent application publication US 2008/0002579 discloses an arrangement, system, and method for switching data packet flows in a communication system. A flow processing core classifies packet flows and defines processing flow sequences applicable to the packet flow. Packet flow sequence information may be determined so that reclassification of already classified packets is avoided.

It starts to be a common request from the network operators to share a common transport for multiple radio technologies in Radio Base Stations, RBSs, with multiple radio technologies with data traffic belonging to the same QoS class from each technology.

RBSs are developed to be placed both inside and outside buildings for serving the users and their telecommunications equipment. The casing of an RBS can contain both antennas and telecommunications circuitry. Further, the antennas and telecommunications circuitry is designed to serve a number of different Radio Access Technologies, RATs, such as WCDMA (Wideband Code Division Multiple Access), GSM (Global System for Mobile Communications), LTE (Long Term Evolution), Wi-Fi (Wireless Fidelity, also abbreviated WIFI, WI-FI, WiFi). The backhauling is based on the Internet Protocol, IP. Thus, despite RAT, all transfer of the data packets will be performed over an IP infrastructure instead of multiple, parallel dedicated network structures that are technology adapted. The one and same IP infrastructure solution has a number of advantages, e.g. simplicity, known technology, low investment costs, over a solution where each RAT is served separately resulting in separate wiring or packet infrastructure from each RBS. Thus, all data packets will be forwarded on the same wire or in the same optical fibre and packet infrastructure irrespective of the RAT a data packet originates from.

The design of the RBSs provides the possibility to cascade a number of RBSs. Each RBS is therefore provided with a switching/routing possibility. However, in a scenario wherein a large number of RBSs are cascaded in the network, and a large number of user equipments are active at the same time, this might result in congestion in the data traffic. Tests of congestion situations have shown that if the same Quality of Service, QoS, class is used for data packets to/from different RATs, normal scheduling will not forward data packets in a fair manner irrespective of the RAT that the data packets originate from when the data traffic from different RATs are mixed on the same wire and in the same IP tunnel. In the tests, the Best Effort QoS class was used for all data packet traffic. Instead of an equal and fair distribution of data packets using only a QoS based scheduling, the result became an uneven distribution between radio technologies.

This result could be explained by the different characteristics of the separate technologies, wherein the delay in WCDMA is one factor that does not map well with the corresponding delay characteristics for TCP/IP, i.e. Transport Control Protocol and Internet Protocol. There is no existing solution for accomplishing fairness between data packets originating from different radio access technologies when scheduling data traffic flows having the same QoS class, i.e. Quality of Service class, and belonging to the same data communications or telecommunication network.

### SUMMARY

It is an object of the following described embodiment to provide solutions for identifying data traffic flows in the same QoS class belonging to different technologies to be able to give these flows different treatment. The invention is defined by the appended claims. The following examples may be useful for understanding the invention.

According to one aspect, examples of a method in a node in a radio access network are provided. Said node comprises one or more radio access technology circuitry, each radio access technology circuitry serving data packet traffic according to a certain radio access technology. The method comprises receiving data packets and loading them into IP data packets, and marking the header of the IP data packets with an identification code indicating which radio access technology that the data packets originated from, and a common QoS class regardless of which radio access technology each data packet originated from. The method further comprises sending the data packets via a common secure tunnel.

According to further one aspect, examples of a node in a radio access network are provided. Said node comprising one or more radio access technology circuitries, each radio access technology circuitry serving data packet traffic according to a certain radio access technology, said radio access technology circuitry being configured to receive data packets and loading them into IP data packets. The node further comprises marking means configured to mark the header of the IP data packets with a code identifying which radio access technology that the data packets originated from and a common Quality of Service class regardless of which radio access technology each data packet originated from. The node further comprises a sender for sending the IP data packets via a common secure tunnel.

According to yet another aspect, examples of a scheduling method are presented. The method is an enhanced scheduling method in a radio access network node. The node comprises routing or switching functionality. The method comprises the reception of one or more IP data packets, each data packet being marked in the header with an identification code indicating the radio access technology from which each data packet originated from. The method further comprises a step of scheduling and forwarding the IP data packets according their radio access technology identification code using a preset radio access technology scheduling policy.

According to further one aspect, examples of a node in a radio access network are provided. The node comprises routing or switching functionality means, which is adapted to receive and forward one or more IP data packets, each data packet being marked in the header with an identification code indicating the radio access technology from which each data packet originated from, wherein the routing or switching functionality means is controlled by a controller which schedules the data packets according to their radio access technology identification code using a preset radio technology scheduling policy.

One advantage with the above described examples wherein a radio access technology indicating code is inserted in the header of IP data packets is that it makes it possible to differentiate the data flow based on radio technologies even if they belong to the same traffic class, i.e. require the same Quality of Service, and the IP packets are sent inside the same encrypted tunnel.

### BRIEF DESCRIPTION OF THE DRAWINGS

The foregoing, and other, objects, features and advantages of the present embodiments will be more readily understood upon reading the following detailed description in conjunction with the drawings in which:
Figure 1 is a block diagram of an exemplary network in which embodiments of entities and methods described herein is implemented;
Figure 2 is a block diagram illustrating cascaded Radio Base Stations in different nodes and functionality blocks in said nodes;
Figure 3 is a diagram illustrating a Differentiated Services field of a TCP/IP header;
Figure 4 is diagram illustrating a table containing the recommended traffic classes used for defining and indicating the level of Differentiated Service, DiffServ;
Figure 5 is a diagram illustrating a table containing proposed radio access technology identification code both defining and indicating which radio access technology the data packets originate from and the level of Differentiated Service;
Figure 6 is a flowchart of an embodiment of a method performed in a node comprising a Radio Base Station;
Figure 7 is a flowchart of an embodiment of a method performed in a node comprising a routing and/or switching functionality.

### DETAILED DESCRIPTION

In the following description, for purposes of explanation and not limitation, specific details are set forth, such as particular circuits, circuit components, techniques, etc. in order to provide a thorough understanding of the proposed embodiments. However, it will be apparent to one skilled in the art that the proposed embodiments may be practiced in other embodiments that depart from these specific details. In other instances, detailed descriptions of well known methods, devices, and circuits are omitted so as not to obscure the description of the present invention with unnecessary detail.

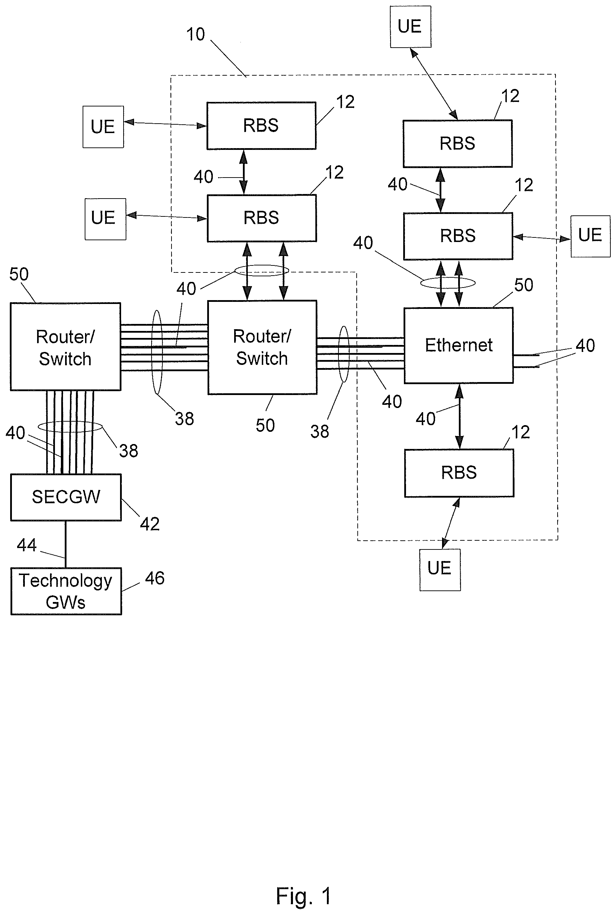

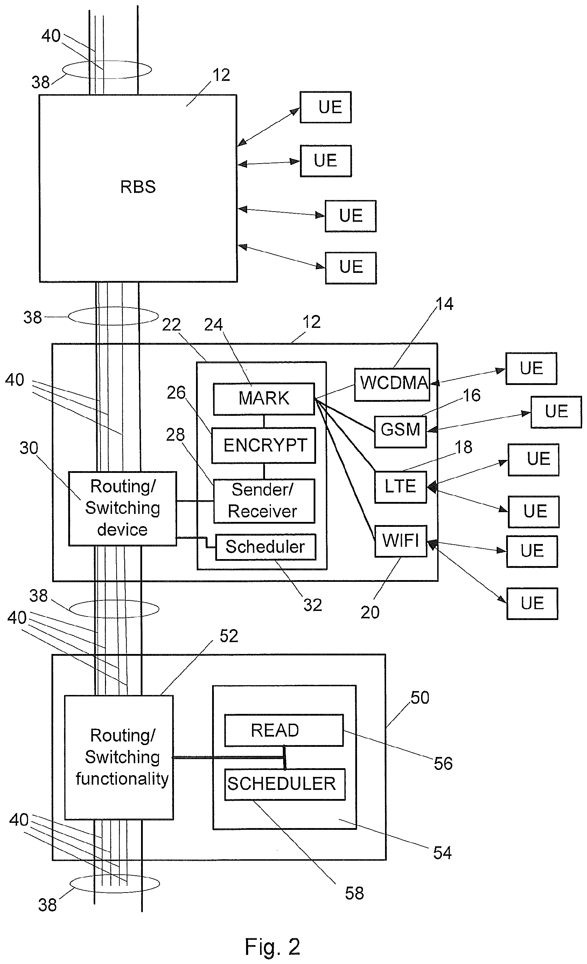

Figure 1 illustrates a telecommunications network involving a Radio Access Network, RAN, 10. The RAN 10 comprises a number of Radio Base Station, RBS, nodes 12, which are enabled to serve one or more Radio Access Technologies RATs, e.g. such as WCDMA, GSM, LTE, WIFI. Thus, a plurality of User Equipments may be temporarily wireless connected to an RBS via different RATs simultaneously, but an UE is preferably only using one of the available RATs for the connection with the RBS. The backhauling is based on the Internet Protocol, IP. Thus, despite RAT, all transfer of the data packets will be performed over an IP infrastructure. Due to the RAN security requirement, the data packet traffic/flows to and from the RBSs 12 are transferred in IP Security tunnels, IPsec tunnels or other types of encrypted tunnels. Each RBS 12 is designed to send and receive data packets flow in one IPsec tunnel for further transfer over separate mobile backhaul networks or over the Internet. The data packets are sent via a conductor 38, e.g. copper wiring, optical fibre, etc. Thus, an IPsec tunnel starts or ends at an RBS, which is situated in a node 12 of the RAN. The RAN may also comprise a number of nodes 50 with routing and/or switching functionality, e.g. Ethernet switches, Route/Switch entities, etc. The RBSs may also be provided with routing and/or switching functionality for enabling cascade connection of RBSs, as illustrated in both figure 1 and figure 2. Thus, both nodes 12 and node 50 comprise routing and/or switching functionality involving a scheduler. Said scheduler involves both policing and shaping functionalities.

In the illustrated example, all IPsec tunnels start in a node comprising a RBS, pass through the network and ends in the same node, a SECGW, i.e. a Security Gateway, 42. The IP data packets are forwarded from the SECGW 42 in data paths 44 via technology gateways 46 to their destination addresses. Examples of technology gateways are Serving GPRS Support Node (SGSN), Gateway GPRS Support Node (GGSN), Serving Gateway (SGW), Packet Data Network Gateway (PDN-GW), Broadband Network Gateway (BNG), WiFi Services Gateway (WSG), WiFi/Wireless Access Controller (WAC).

Figure 2 illustrates an embodiment of a telecommunications network, comprising cascaded RBSs connected to a node involving routing and/or switching functionality. Figure 2 comprises also a cross-section of a schematically illustrated RBS, which now will be described in more detail. Many ordinary RBS components and circuits are omitted so as not to obscure the description of the present embodiment with unnecessary details.

In the illustrated embodiment of an RBS, a number of the antennas (not shown) and radio base modules 14, 16, 18, 20 are provided in the RBS. In the illustrated embodiment, the radio base station RBS is provided with a radio base module comprising WCDMA radio access technology circuitry 14, one radio base module comprising GSM radio access technology circuitry 16, one radio base module comprising LTE radio access technology circuitry 18, and one radio base module comprising Wi-Fi radio access technology circuitry 20. The RBS comprises also a controller 22 configured to receive data packets from the radio base modules 14, 16, 18, 20 and loading them into IP data packets. Said controller 22 also comprises marking means 24 configured to mark the header of the IP data packets with a code identifier which identifies radio access technology that the data packets originated from. Each data packet is further marked with a common QoS class based on the traffic class used by the user equipment for the specific service regardless of which radio access technology each data packet originates from. The controller 22 further comprises encryption means 26 which is configured to copy the code identifier marking to IPsec tunnel headers thereby enabling identification of the radio technology enabling enhanced scheduling treatment based on radio access technology.

A sender/receiver unit 28 is also provided for sending the data packets via a conductor 38, e.g. copper wiring, optical fibre, etc. The data packets are packed into an IPsec tunnel 40 and sent by the sender/receiver unit 28 via an routing/switching device 30. The conductor 38 is capable of carrying a plurality of tunnels 40 at the same time. The routing/switching device 30 handles the upstream and downstream data packet flows 40, i.e.in the IPsec tunnels 40 as well as the IPsec tunnel starting in the same node 12 and RBS. The routing/switching device 30 is controlled by the controller 22 comprising a scheduler 32.

Further, the radio access network 10 may comprise a node 50 comprising routing and/or switching functionality means 52, said device 52 being adapted to receive and forward IP data packets. Each data packet being marked in the header with an identification code indicating the radio access technology from which each data packet originated from. The routing or switching functionality means 52 is controlled by a controller 54 which is configured to read and check the headers of the IP data packets in the IPsec tunnels. It comprises a scheduler 58 that schedules the data packets according the content of their headers and a scheduling policy dedicated to the node and the routing/switching device 52. The header of an IP data packet or an IP tunnel header of an IP data packet in an IP tunnel 40 comprises a radio access technology identification code and a pre-set radio technology scheduling policy enables differentiated scheduling treatment based on different radio access technology. Differentiated scheduling treatment may be necessary for handling and for compensating for scheduling problems concerning certain radio technologies that might occur, e.g. at congestion.

The backhauling of the RAN is based on Internet Protocol IP. The identification code is inserted in the Differentiated Services, DS, field.

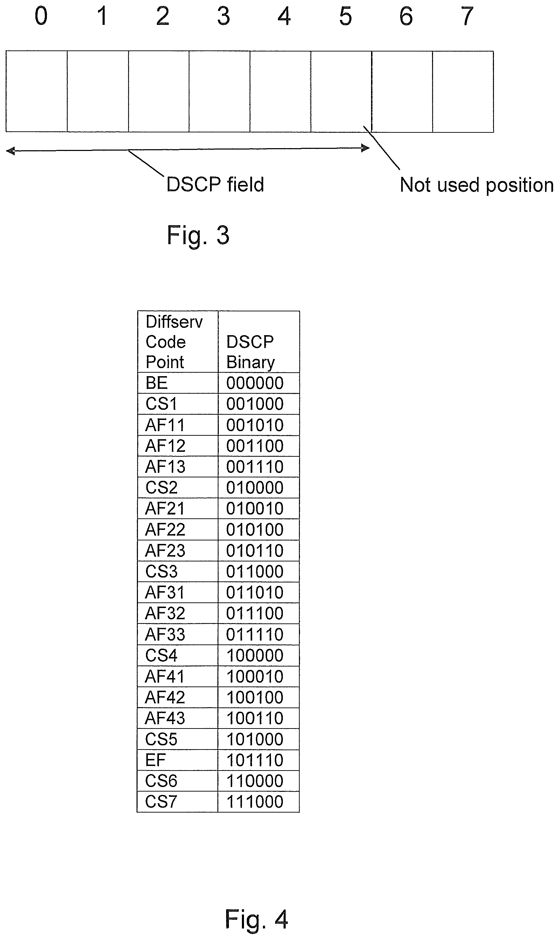

Figure 3 is illustrating a Differentiated Services field of a TCP/IP header. It is eight bits long. The position number 0-7 of each bit is indicated above the field. The sixth first bits, number 0-5, constitute the Differentiated Services Code Point field, which is used for indicating a selected traffic class. The different classes are listed in figure 4. The two last bits, bit position 6 and 7, are assigned for Explicit Congestion Notification ECN which is an extension to the Internet Protocol and to the Transmission Control Protocol TCP and is defined in RFC 3168 (from 2001). ECN allows end-to-end notification of network congestion without dropping packets. ECN is an optional feature that is only used when both endpoints support it and are willing to use it. It is only effective when supported by the underlying network.

Figure 4 is a table containing the recommended traffic classes used for defining and indicating the level of Differentiated Service, DiffServ.

The DiffServ RFCs recommend, but do not require, certain encodings. This gives a network operator great flexibility in defining traffic classes. In practice, however, most networks use the following commonly-defined Per-Hop Behaviors:
- BE or Default PHB (Per hop behavior)-which is typically BE, i.e. Best-Effort traffic;
- EF, i.e. Expedited Forwarding, PHB-dedicated to low-loss, low-latency traffic;
- AF, i.e. Assured Forwarding PHB-gives assurance of delivery under prescribed conditions;
- CS, i.e. Class Selector PHBs-which maintain backward compatibility with another IP field, the IP Precedence field.

Said traffic classes are listed in the left column, while their corresponding recommended binary coding is listed in the right column. However, of the sixth bit long sub-field DFSC, i.e. Differentiated Services Code Point field, the standard only makes use of the first five bit positions 0-4. As seen in the table, figure 4, the sixth position is not used for value assignment and it is always "0". It is therefore suggested in this disclosure, that the sixth position is used to indicate that a radio access technology identification code is present in the header of the IP header. More generally expressed, at least one of the bits in the DSCP field is used to indicate that a radio access technology identification code is present. Further, it is suggested that one or more additional bits in the DSCP field is used to identify the radio access technology. According to standard procedures when establishing an IPsec tunnel for forwarding IP data packets, the content of the DSCP field of the hidden packets is copied to the IPsec tunnel header thereby enabling identification of the radio technology for routing and/or switching devices along the path of the IPsec tunnel. A scheduling policy of a routing/switching device will therefore be able to consider the radio access technology of the received data packets and compensate for any unfair advantages for certain data packets during the scheduling process.

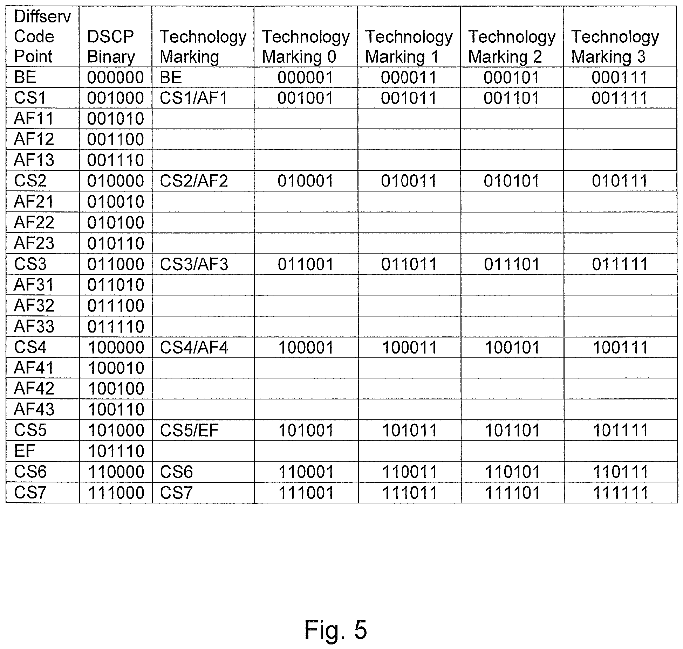

Figure 5 is a table containing proposed radio access technology identification code both defining and indicating which radio access technology the data packets originate from and the level of Differentiated Service to use. The two columns to the left are similar with the columns of the table in figure 4. The sixth bit of the binary code is "0". When the last bit of the binary code is set to "1", a controller of a routing and/or switching device identifies the binary code to be a radio access technology identification code instead of an ordinary DSCP binary code. The binary radio access technology identification code is denoted "Technology marking 0", "Technology marking 1", etc. in the headers of the four columns to the right in the table. Thus, when the "1" is set in the sixth position, it will be possible to identify radio access technology of the user data packets, and the selected traffic class too. As illustrated, less traffic classes are used. In the illustrated example, there is one column marked "Technology marking" for each radio access technology. As an example, "Technology marking 0" may be assigned for Wi-Fi related data packets, "Technology marking 1" may be assigned for WCDMA related data packets , "Technology marking 2" may be assigned for GSM related data packets, and "Technology marking 3" may be assigned for LTE related data packets. Obviously, it is possible to vary which technology marking that corresponds to which access technology.

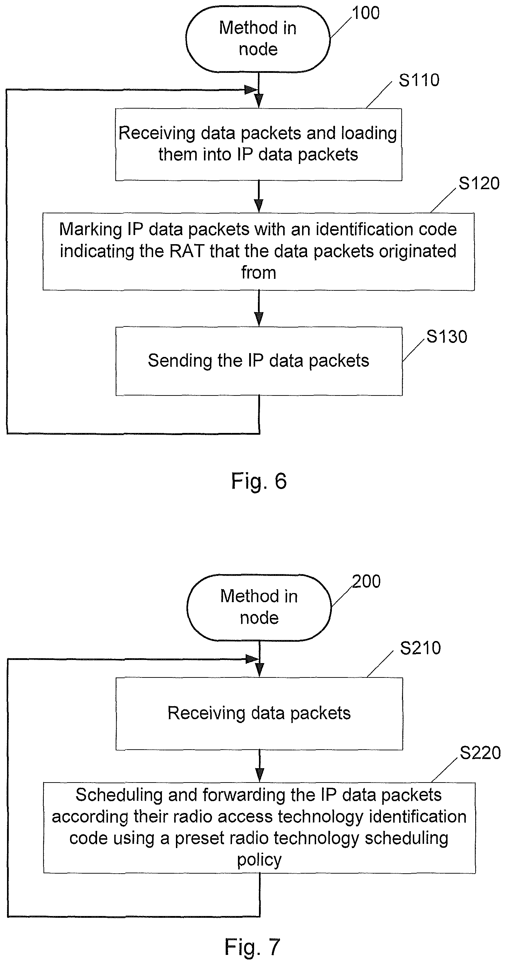

How this enhanced DiffServ field coding could be used will now be described in the following with reference to the proposed embodiments of methods illustrated in figures 6 and 7.

In figure 6, an embodiment of a method is illustrated. The method is performed in a node 12 comprising an RBS. The RBS is communicating wirelessly with a number of UEs. Different UEs may operate according to different Radio Access Technologies RATs. The RBS offers access to the RAN by means of different radio access technology circuitry in different Radio Base Modules 14-20 (see figure 2) designed to serve different RATs.

**S110:** Receiving data packets and loading them into IP data packets. The RAT circuitries in the Radio Base Modules 14-20 (figure 2) receive the user data packets from different UEs connected to the access node 12. Each RAT circuitry sorts the user data packets, loads the user data packets into the payload field of an IP data packet having an IP header and forwards them to marking means controlled by the controller 22.

**S120:** Marking IP data packets with an identification code indicating the Radio Access Technology that the data packets originate from and a common Quality of Service class based on the traffic class used by the user equipment for the specific service regardless of which radio access technology each data packet originated from. The controller 22 handles the IP data packets received from different RAT circuitries. The controller 22 comprises marking means 24 that selects from a stored table, e.g. a table according to figure 5, a radio access technology identification code corresponding to the RATs in the user data packets in the payload field and the preferred Quality of Service, i.e. Traffic class. A common Quality of Service class based on the traffic class used by the user equipment for the specific service for all IP data packets to be sent from the node is selected regardless of which radio access technology each data packet originated from. The marking means 24 inserts the selected radio access technology identification code into the Diffserv Code Point field. The controller 22 also comprises encryption means 26 configured to encrypt each IP data packet by providing said packets with a new IP tunnel header to which some of the IP data header's content, involving the DiffServ field, is copied. The encrypted IP data packet comprising the radio access technology identification code in the header is now prepared to be sent through the established IPsec tunnel.

**S130:** Sending the IP data packets via the same secure tunnel. The controller 22 is further configured to send by means of a sender 28 the IP data packets through the same established IPsec tunnel from the RBS to a destination gateway.

In figure 7, some embodiments of a method for enhanced scheduling of IP data packets based on RAT information regarding the user data packets in the payload is illustrated. The method is performed in a node having routing and/or switching functionality.

**S210:** Receiving data packets. One or more IPsec tunnels 40 passes through the node having a routing and/or switching device 52, which receives the data packets. Traffic for the same traffic class is queued in the same QoS queue, but the technology marking makes it possible to apply QoS policies or profiles for traffic per technology and traffic class at each aggregation point/node in a network and queue the traffic in the same or different QoS queues. Each tunnel 40 carries IP data packets loaded with user data packets originating from one or more Radio Access Technology RAT. Each IP data packet has a payload of user data packets originating from one of the RATs. Thus, the payload does not carry user data packets from different RATs at the same time. Each IP data packet in a tunnel has been provided with an IP tunnel header, an outer header. The IP tunnel header carries information which is copied from the IP data packets header. Thus, the outer header carries the radio access technology identification code of the IP data packets' header.

**S220:** Scheduling and forwarding the IP data packets according to their Radio Access Technology identification code using a pre-set radio access technology scheduling policy. The routing or switching functionality means 52 is controlled by a controller 54 which is configured with means 56 to read and check the headers of the IP data packets in the IPsec tunnels 40. It comprises a scheduler 58 that schedules the IP data packets according the content of their headers and a scheduling policy dedicated to the node and the routing/switching device 52. If the header of an IP data packet or an IP tunnel header of an IP data packet in an IP tunnel 40 comprises the radio access technology identification code, i.e. binary "1" in the 6^{th} position of the Differentiated Services Code Point field is read and recognized by the controller 54, a pre-set radio technology scheduling policy enables differentiated scheduling treatment based on different radio access technology. Differentiated scheduling treatment may be necessary for handling and for compensating for scheduling problems concerning certain radio technologies that might occur, e.g. at congestion. If the 6^{th} position of the Differentiated Services Code Point field is "0", the controller is configured to interpret the binary number in the Differentiated Services Code Point field as a traffic class, e.g. given by a table such as the table in figure 4.

A skilled person in the art realizes that the above described embodiments provide solutions for identifying data traffic flows in the same QoS class belonging to different technologies to be able to give these flows different treatment. One advantage with the above described embodiments wherein a radio access technology indicating code inserted in the header of IP data packets is that it makes it possible to differentiate the data flow based on radio technologies even if they belong to the same traffic class, i.e. require the same Quality of Service, and the IP packets are sent inside the same encrypted tunnel.

The embodiments of the nodes may be implemented in digital electronically circuitry, or in computer hardware, firmware, software, or in combinations of them. Described embodiments of certain methods, devices, means or apparatus may be implemented in a computer program product tangibly embodied in a machine readable storage device for execution by a programmable processor; and method steps of the invention may be performed by a programmable processor executing a program of instructions to perform functions of the invention by operating on input data and generating output.

The different method and node embodiments may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language or in assembly or machine language if desired; and in any case, the language may be a compiled or interpreted language.

Generally, a processor such as the controllers 22, 54 (see fig. 2) in the nodes 12, 50 will receive instructions and data from a read-only memory and/or a random access memory. Storage devices suitable for tangibly embodying computer program instructions and data include all forms of nonvolatile memory, including by way of example semiconductor memory devices, such as EPROM, EEPROM, and flash memory devices; magnetic disks such internal hard disks and removable disks; magneto-optical disks; and CD-ROM disks. Any of the foregoing may be supplemented by, or incorporated in, specially -designed ASICs (Application Specific Integrated Circuits).

A number of embodiments have been described. It will be understood that various modifications may be made without departing from the scope of these embodiments. Therefore, other implementations of the described embodiments are within the scope of the following claims.

## Claims

1. Method **(100)** in a node **(12)** of a radio access network **(10),** said node comprising one or more radio access technology circuitries, each radio access technology circuitry serving data packet traffic according to a certain radio access technology, said method comprising:
- receiving data packets and loading them into IP data packets **(S110);**
- marking **(S120)** the header of the IP data packets with an identification code indicating the radio access technology the data packets originated from and a common Quality of Service class based on the traffic class used by the user equipment for the specific service regardless of which radio access technology each data packet originated from,
- sending (**S130**) the data packets via a common secure IPsec tunnel.
**characterized in that** the identification code is inserted in the Differentiated Services Code Point, DSCP, field, so as to enable identification of the radio access technology when the packet is transferred in the common secure IPsec tunnel.

2. Method according to claim 1, wherein at least one of the bits in the DSCP field is used to indicate that a radio access technology identification code is present.

3. A node (12) in a radio access network (10), said node comprising one or more radio access technology circuitries, each radio access technology circuitry (14,16,18,20) serving data packet traffic according to a certain radio access technology, said radio access technology circuitry being configured to receive data packets and loading them into IP data packets, wherein the node further comprises marking means (24) configured to mark the header of the IP data packets with an identification code identifying the radio access technology the data packets originated from and a common Quality of Service class based on the traffic class used by the user equipment for the specific service regardless of which radio access technology each data packet originated from, wherein the node further comprises
a sender device (28) for sending the data packets via a common secure IPsec tunnel,
**characterized in that** the marking means (24) is further configured to insert the identification code in the Differentiated Services Code Point, DSCP, field, so as to enable identification of the radio access technology when the packet is transferred in the common secure IPsec tunnel.

4. The node according to claim 3, wherein the marking means (**24**) is further configured to insert at least one of the bits in the DSCP field, said bit being used to indicate that a radio access technology identification code is present.

5. Method (**200**) in a node **(12,50)** of a radio access network (**10**), the node comprising routing or switching functionality, wherein the method comprises:
- receiving **(S210)** one or more IP data packets in one or more IPsec tunnels, each data packet being marked in the header with an identification code indicating the radio access technology each data packet originated from, wherein the identification code is inserted in the Differentiated services Code Point, DSCP, field, so as to enable identification of the radio access technology when the packet is transferred in one of the IPsec tunnels, and
- scheduling and forwarding (**S220**) the IP data packets according their radio access technology identification code in the IPsec tunnel header using a preset radio access technology scheduling policy.

6. Method according to claim 5, wherein at least one of the bits in the DSCP field is used to indicate that a radio access technology identi-fication code is present.

7. A node (**12**, **50**) in a radio access network (**10**), the node comprising routing or switching functionality means (**52**), said means being adapted to receive one or more IP data packets in one or more IPsec tunnels each data packet being marked in the header with an identification code indicating the radio access technology each data packet originated from, wherein the identification code is inserted in the Differentiated services Code Point, DSCP, field, so as to enable identification of the radio access technology when the packet is transferred in one of the IPsec tunnels, and wherein the routing or switching functionality means is controlled by a controller (**54**) which is configured to schedule and forward the data packets according to their radio access technology identification code in the IPsec tunnel header using a preset radio access technology scheduling policy.

8. The node according to claim 7, wherein at least one of the bits in the DSCP field is used to indicate that a radio access technology identification code is present.

## Patentansprüche

1. Verfahren (**100**) in einem Knoten (**12**) eines Funkzugangsnetzes (**10**), wobei der Knoten eine oder mehrere Funkzugangstechnikschaltungen umfasst, wobei jede Funkzugangstechnikschaltung Datenpaketverkehr gemäß einer bestimmten Funkzugangstechnik bedient, wobei das Verfahren umfasst:
- Empfangen von Datenpaketen und Laden derselben in IP-Datenpakete (**S110**) ;
- Markieren (**S120**) des Headers der IP-Datenpakete mit einem Identifikationscode, der die Funkzugangstechnik, aus der die Datenpakete stammen, und eine gemeinsame Dienstgüteklasse auf der Basis der Verkehrsklasse angibt, die von dem Benutzergerät für den spezifischen Dienst verwendet wird, ungeachtet dessen, von welcher Funkzugangstechnik das jeweilige Datenpaket stammt,
- Senden (**S130**) der Datenpakete über einen gemeinsamen sicheren IPsec-Tunnel,
**dadurch gekennzeichnet, dass** der Identifikationscode in das Feld "Differentiated Services Code Point", DSCP, eingefügt wird, um eine Identifizierung der Funkzugangstechnik zu ermöglichen, wenn das Paket in dem gemeinsamen sicheren IPsec-Tunnel übertragen wird.

2. Verfahren nach Anspruch 1, wobei mindestens eines der Bits in dem DSCP-Feld verwendet wird, um anzugeben, dass ein Funkzugangstechnik-Identifikationscode vorhanden ist.

3. Knoten (12) in einem Funkzugangsnetz (10), wobei der Knoten einen oder mehrere Funkzugangstechnikschaltungen umfasst, wobei jede Funkzugangstechnikschaltung (14, 16, 18, 20) Datenpaketverkehr gemäß einer bestimmten Funkzugangstechnik bedient, wobei die Funkzugangstechnikschaltung dazu konfiguriert ist, Datenpakete zu empfangen und sie in IP-Datenpakete zu laden, wobei der Knoten ferner ein Markierungsmittel (24), das zum Markieren des Headers der IP-Datenpakete mit einem Identifikationscode, der die Funkzugangstechnik, aus der die Datenpakete stammen, und eine gemeinsame Dienstgüteklasse auf der Basis der Verkehrsklasse angibt, die von dem Benutzergerät für den spezifischen Dienst verwendet wird, konfiguriert ist, ungeachtet dessen, von welcher Funkzugangstechnik das jeweilige Datenpaket stammt, wobei der Knoten ferner eine Sendervorrichtung (28) zum Senden der Datenpakete über einen gemeinsamen sicheren IPsec-Tunnel umfasst,
**dadurch gekennzeichnet, dass** das Markierungsmittel (24) ferner dazu konfiguriert ist, den Identifikationscode in das Feld "Differentiated Services Code Point", DSCP, einzufügen, um eine Identifizierung der Funkzugangstechnik zu ermöglichen, wenn das Paket in dem gemeinsamen sicheren IPsec-Tunnel übertragen wird.

4. Knoten nach Anspruch 3, wobei das Markierungsmittel (**24**) ferner dazu konfiguriert ist, mindestens eines der Bits in dem DSCP-Feld einzufügen, wobei das Bit verwendet wird, um anzugeben, dass ein Funkzugangstechnik-Identifikationscode vorhanden ist.

5. Verfahren (**200**) in einem Knoten (**12**, **50**) eines Funkzugangsnetzes (**10**), wobei der Knoten eine Routing- oder Vermittlungsfunktion umfasst, wobei das Verfahren umfasst:
- Empfangen **(S210)** eines oder mehrerer IP-Datenpakete in einem oder mehreren IPsec-Tunneln, wobei jedes Datenpaket im Header mit einem Identifikationscode markiert ist, der eine Funkzugangstechnik angibt, von der jedes Datenpaket stammt, wobei der Identifikationscode in das Feld "Differentiated Services Code Point", DSCP, eingefügt wird, um eine Identifizierung der Funkzugangstechnik zu ermöglichen, wenn das Paket in einem der IPsec-Tunnel übertragen wird, und
- zeitliches Planen und Weiterleiten **(S220)** der IP-Datenpakete gemäß ihrem Funkzugangstechnik-Identifikationscode in dem IPsec-Tunnel-Header unter Verwendung einer voreingestellten Funkzugangstechnik-Zeitplanungsrichtlinie.

6. Verfahren nach Anspruch 5, wobei mindestens eines der Bits in dem DSCP-Feld verwendet wird, um anzugeben, dass ein Funkzugangstechnik-Identifikationscode vorhanden ist.

7. Knoten (**12**, **50**) in einem Funkzugangsnetz (**10**), wobei der Knoten ein Routing- oder Vermittlungsfunktionsmittel (**52**) umfasst, wobei die Mittel zum Empfangen eines oder mehrerer IP-Datenpakete in einem oder mehreren IPsec-Tunneln vorgesehen ist, wobei jedes Datenpaket im Header mit einem Identifikationscode markiert ist, der eine Funkzugangstechnik angibt, von der jedes Datenpaket stammt, wobei der Identifikationscode in das Feld "Differentiated Services Code Point", DSCP, eingefügt wird, um eine Identifizierung der Funkzugangstechnik zu ermöglichen, wenn das Paket in einem der IPsec-Tunnel übertragen wird,
und wobei die Routing- oder Vermittlungsfunktionsmittel durch eine Steuerung (**54**) gesteuert wird, die dazu konfiguriert ist, die Datenpakete gemäß ihrem Funkzugangstechnik-Identifikationscode in dem IPsec-Tunnel-Header unter Verwendung einer voreingestellten Funkzugangstechnik-Zeitplanungsrichtlinie zeitlich zu planen und weiterzuleiten.

8. Knoten nach Anspruch 7, wobei mindestens eines der Bits in dem DSCP-Feld verwendet wird, um anzugeben, dass ein Funkzugangstechnik-Identifikationscode vorhanden ist.

## Revendications

1. Procédé (**100**) dans un noeud (**12**) d'un réseau d'accès radio (**10**), ledit noeud comprenant un ou plusieurs circuits de technologie d'accès radio, chaque circuit de technologie d'accès radio desservant un trafic de paquets de données selon une certaine technologie d'accès radio, ledit procédé comprenant :
- la réception de paquets de données et leur chargement dans des paquets de données IP (**S110**) ;
- le marquage (**S120**) de l'en-tête des paquets de données IP avec un code d'identification indiquant la technologie d'accès radio d'où provenaient les paquets de données et une classe commune de qualité de service basée sur la classe de trafic utilisée par l'équipement d'utilisateur pour le service spécifique indépendamment de la technologie d'accès radio d'où provenait chaque paquet de données,
- l'envoi (**S130**) des paquets de données par l'intermédiaire d'un tunnel IPsec sécurisé commun.
**caractérisé en ce que** le code d'identification est inséré dans le champ de point de code de services différenciés, DSCP, de façon à permettre l'identification de la technologie d'accès radio lorsque le paquet est transféré dans le tunnel IPsec sécurisé commun.

2. Procédé selon la revendication 1, dans lequel au moins l'un des bits dans le champ DSCP est utilisé pour indiquer qu'un code d'identification de technologie d'accès radio est présent.

3. Noeud (12) dans un réseau d'accès radio (10), ledit noeud comprenant un ou plusieurs circuits de technologie d'accès radio, chaque circuit de technologie d'accès radio (14, 16, 18, 20) desservant un trafic de paquets de données selon une certaine technologie d'accès radio, ledit circuit de technologie d'accès radio étant configuré pour recevoir des paquets de données et les charger dans des paquets de données IP, le noeud comprenant en outre un moyen de marquage (24) configuré pour marquer l'en-tête des paquets de données IP avec un code d'identification identifiant la technologie d'accès radio d'où provenaient les paquets de données et une classe commune de qualité de service basée sur la classe de trafic utilisée par l'équipement d'utilisateur pour le service spécifique indépendamment de la technologie d'accès radio d'où provenait chaque paquet de données, le noeud comprenant en outre un dispositif expéditeur (28) pour l'envoi des paquets de données par l'intermédiaire d'un tunnel IPsec sécurisé commun,
**caractérisé en ce que** le moyen de marquage (24) est en outre configuré pour insérer le code d'identification dans le champ de point de code de services différenciés, DSCP, de façon à permettre l'identification de la technologie d'accès radio lorsque le paquet est transféré dans le tunnel IPsec sécurisé commun.

4. Noeud selon la revendication 3, dans lequel le moyen de marquage (**24**) est en outre configuré pour insérer au moins un des bits dans le champ DSCP, ledit bit étant utilisé pour indiquer qu'un code d'identification de technologie d'accès radio est présent.

5. Procédé (**200**) dans un noeud **(12,50)** d'un réseau d'accès radio (**10**), le noeud comprenant une fonctionnalité de routage ou de commutation, le procédé comprenant :
- la réception **(S210)** d'un ou plusieurs paquets de données IP dans un ou plusieurs tunnels IPsec, chaque paquet de données étant marqué dans l'en-tête avec un code d'identification indiquant la technologie d'accès radio d'où provenait chaque paquet de données, le code d'identification étant inséré dans le champ de point de code de services différenciés, DSCP, de façon à permettre l'identification de la technologie d'accès radio lorsque le paquet est transféré dans un des tunnels IPsec, et
- la planification et l'acheminement **(S220)** des paquets de données IP selon leur code d'identification de technologie d'accès radio dans l'en-tête de tunnel IPsec en utilisant une stratégie de planification de technologie d'accès radio prédéfinie.

6. Procédé selon la revendication 5, dans lequel au moins l'un des bits dans le champ DSCP est utilisé pour indiquer qu'un code d'identification de technologie d'accès radio est présent.

7. Noeud (**12**, **50**) dans un réseau d'accès radio (**10**), le noeud comprenant un moyen de fonctionnalité de routage ou de commutation (**52**), ledit moyen étant conçu pour recevoir un ou plusieurs paquets de données IP dans un ou plusieurs tunnels IPsec, chaque paquet de données étant marqué dans l'en-tête avec un code d'identification indiquant la technologie d'accès radio d'où provenait chaque paquet de données, dans lequel le code d'identification est inséré dans le champ de point de code de services différenciés, DSCP, de façon à permettre l'identification de la technologie d'accès radio lorsque le paquet est transféré dans un des tunnels IPsec,
et dans lequel le moyen de fonctionnalité de routage ou de commutation est commandé par un contrôleur (**54**) qui est configuré pour planifier et acheminer les paquets de données selon leur code d'identification de technologie d'accès radio dans l'en-tête de tunnel IPsec en utilisant une stratégie de planification de technologie d'accès radio prédéfinie.

8. Noeud selon la revendication 7, dans lequel au moins l'un des bits dans le champ DSCP est utilisé pour indiquer qu'un code d'identification de technologie d'accès radio est présent.
